# EUROPÄISCHE PATENTANMELDUNG

(11) **EP 1 448 027 A1**
(43) Veröffentlichungstag der Anmeldung: **18.08.2004**
(21) Anmeldenummer: 04001805.3
(22) Anmeldetag: 28.01.2004
(51) Int. Cl.: H05B 33/08, H05B 33/12, A63J 17/00, H04R 7/06

(54) **Lautsprecher mit Elektrolumineszenz-Leuchtanordnung**

(30) Priorität: 12.02.2003 DE 20302250 U
(71) Anmelder: FER Fahrzeugelektrik GmbH, 99819 Eisenach (DE)
(72) Erfinder: Moser, Helmut, D-76646 Bruchsal (DE)
(74) Vertreter: Strasser, Wolfgang, Dipl.-Phys.

(57) **Zusammenfassung**

Bei einer Elektrolumineszenz-Leuchtanordnung, mit wenigstens einem Flachkondensator (3), der eine Basiselektrode und eine transparente Deckelektrode (6) umfaßt, zwischen denen sich eine Pigmentschicht (5) befindet, die durch das Anlegen einer Betriebs-Wechselspannung an die beiden Elektroden zum Leuchten gebracht wird, ist eine Schaltungsanordnung (10) zur Beeinflussung der Betriebs-Wechselspannung des Flachkondensators (3) durch ein niederfrequentes Wechselspannungssignal vorgesehen.

## Beschreibung

Die Erfindung betrifft eine Elektrolumineszenz-Leuchtanordnung der im Oberbegriff von Anspruch 1 niedergelegten Art.

Derartige Elektrolumineszenz-Leuchtanordnungen umfassen wenigstens einen auf ein Substrat aufgebrachten Flachkondensator, der eine im allgemeinen nicht transparente Basiselektrode aus einem elektrisch gut leitenden Material, beispielsweise Kupfer oder Aluminium, eine diese Basiselektrode überdeckende Isolationsschicht, die vorzugsweise durch helles Einfärben gleichzeitig als Reflexionsschicht dient, eine diese Isolationsschicht überdeckende Pigmentschicht, welche die im Betrieb das Elektrolumineszenzleuchten abgebenden, dotierten Pigmente enthält, und eine die Pigmentschicht überdeckende, transparente, elektrisch leitende Deckelektrode umfaßt, die dem Betrachter bzw. der zu beleuchtenden Fläche zugewandt ist und durch die hindurch das von der Pigmentschicht abgegebene Licht austritt. Meist wird diese transparente Deckelektrode durch eine transparente Schutzschicht abgedeckt, die mechanische Beschädigungen und das Eindringen von Feuchtigkeit verhindert.

Legt man an die beiden Elektroden eines solchen Flachkondensators eine Betriebs-Wechselspannung mit einer Frequenz von ca. 400 Hz bis 600 Hz und einer Spannungsamplitude in der Größenordnung von 100 bis 150 Volt an, dann leuchtet die Pigmentschicht mit einer für das menschliche Auge konstanten Helligkeit.

Für derartige Elektrolumineszenz-Leuchtanordnungen ist eine Vielzahl von Verwendungsmöglichkeiten bekannt, zu denen beispielsweise selbst leuchtende Kraftfahrzeug-Kennzeichenschilder, Tastaturhinterleuchtungen, Endlos-Leuchtbänder oder -Kabel, Beleuchtungsanordnungen für den Kraftfahrzeug-Innenraum, Instrumententafel-Beleuchtungen usw. gehören.

Der Erfindung liegt die Aufgabe zugrunde, eine Elektrolumineszenz-Leuchtanordnung der eingangs genannten Art so weiterzubilden, daß sie für zusätzliche Anwendungszwecke Verwendung finden kann.

Zur Lösung dieser Aufgabe sieht die Erfindung die im Anspruch 1 niedergelegten Merkmale vor.

Dadurch, daß eine Möglichkeit geschaffen wird, die vergleichsweise hochfrequente Betriebs-Wechselspannung durch ein niederfrequentes Wechselspannungssignal zu beeinflussen oder völlig zu ersetzen, erhält man eine Elektrolumineszenz-Leuchtanordnung die nicht mehr mit gleichmäßiger Helligkeit leuchtet sondern deren Helligkeit nach Maßgabe des niederfrequenten Wechselspannungssignals schwankt. Unter "schwanken" wird im vorliegenden Zusammenhang ein Modulationsgrad verstanden, der von 0% bis 100% gehen kann, d.h. die maximale Helligkeit kann nur geringfügig ab- und dann wieder zunehmen oder die Elektrolumineszenz-Leuchtanordnung kann vollständig aus- und eingeschaltet werden. Dazwischen sind beliebige Übergänge möglich.

Unter "niederfrequent" werden hier Frequenzen verstanden, die im Bereich von einigen Zehntel Hz bis etwa 100 Hz liegen, sodaß die durch sie verursachten Helligkeitsänderungen für das menschliche Auge deutlich wahrnehmbar sind.

Besonders interessante Anwendungsmöglichkeiten ergeben sich für eine solche Elektrolumineszenz-Leuchtanordnung dann, wenn das niederfrequente Wechselspannungssignal von dem zum Ansteuern eines Lautsprechers oder einer Lautsprecheranlage dienenden Audiosignal abgeleitet wird, sodaß es dessen niederfrequenten Anteile wiedergibt. Mit derart angesteuerten Elektrolumineszenz-Leuchtanordnungen können beispielsweise die in Diskotheken üblichen, mit herkömmlichen Glühfaden-Lampen unterschiedlicher Farbe ausgestatteten Beleuchtungsanordnungen, deren Helligkeit sich in Abhängigkeit von der jeweils gespielten Musik ändert, ergänzt bzw. ersetzt werden. Ein wesentlicher Vorteil besteht dabei darin, daß der Leistungsverbrauch sowie die Wärmeerzeugung eine Elektrolumineszenz-Leuchtanordnung erheblich geringer sind als bei herkömmlichen Glühfaden-Lampen. Auch die Ansteuergeräte können erheblich einfacher sein, weil niedrigere Leistungen geschaltet beziehungsweise gesteuert werden müssen.

Eine besonders reizvolle Variante der erfindungsgemäßen Elektrolumineszenz-Leuchtanordnung besteht darin, daß zumindest einer ihrer Flachkondensatoren unmittelbar auf die dann zumindest teilweise, d. h. entweder uneingeschränkt oder durch ein lichtdurchlässiges Gewebe oder dergleichen hindurch sichtbare Membran eines Lautsprechers aufgebracht wird, dem auch das zur Modulation der Betriebs-Wechselspannung dienende Audiosignal zugeführt wird. Besitzt der Lautsprecher eine metallische Membran, so kann diese unmittelbar selbst als Basiselektrode des Elektrolumineszenz-Flachkondensators dienen. Besteht die Membran aus einem elektrisch nicht leitenden Material, so wird auf sie zuerst eine metallische, elektrisch leitende Beschichtung aufgebracht, bevor die anderen Schichten des Flachkondensators folgen.

Durch unterschiedliche farbige Gestaltung der Pigmentschichten mehrerer Flachkondensatoren, die auf die Membran eines oder mehrerer Lautsprecher aufgebracht sind und gemeinsam, gruppenweise oder individuell angesteuert werden können, lassen sich vielfältige optische Effekte erzielen.

Diese und weitere vorteilhafte Ausgestaltungen der erfindungsgemäßen Elektrolumineszenz-Leuchtanordnung sind in den Unteransprüchen niedergelegt.

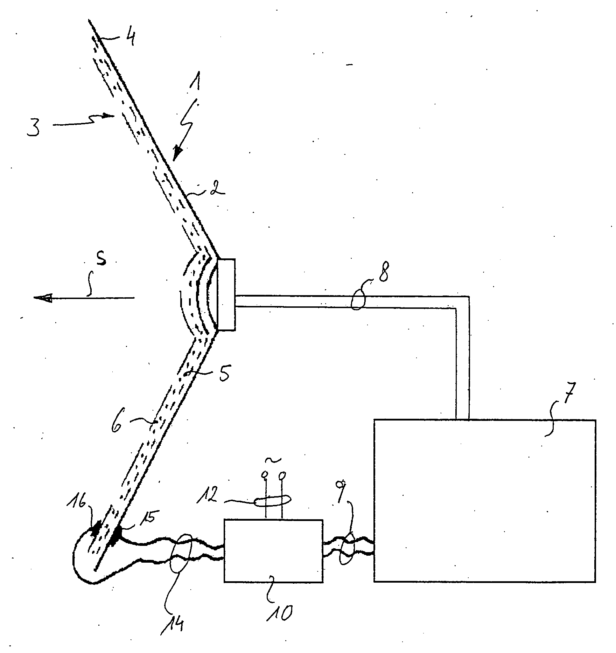

Die Erfindung wird im folgenden anhand eines Ausführungsbeispiels unter Bezugnahme auf die Zeichnung beschrieben; in dieser zeigt die einzige Figur in stark schematisierter Weise einen dynamischen Lautsprecher, auf dessen Membran eine erfindungsgemäße Elektrolumineszenz-Leuchtanordnung aufgebracht ist.

In der Figur ist der Schnitt durch einen dynamischen Lautsprecher 1 wiedergegeben, der eine elektrisch leitfähige, beispielsweise aus Metall bestehende Membran 2 umfaßt, die gleichzeitig als Basiselektrode eines Elektrolumineszenz-Flachkondensators 3 dient, der im wesentlichen die gesamte in Schallabgaberichtung S weisende Oberfläche der Membran 2 bedeckt und eine Isolations- und Reflexionsschicht 4, eine im Betrieb leuchtende Elektrolumineszenz-Pigmentschicht 5 und eine transparente, elektrisch leitende Deckelektrode 6 umfaßt. Über dieser Deckelektrode 6 kann eine (nicht dargestellte) Schutzschicht gegen das Eindringen von Feuchtigkeit vorgesehen sein. Es sei ausdrücklich darauf hingewiesen, daß die Dicken der einzelnen Schichten des Flachkondensators 3 in der Figur der Deutlichkeit halber stark vergrößert wiedergegeben sind. Tatsächlich sind sie außerordentlich dünn und insbesondere so flexibel, daß sie das dynamische Verhalten der Membran 2 des Lautsprechers 1 nicht merklich beeinflussen

Weiterhin ist ein Ansteuergerät 7 vorgesehen, das dem Lautsprecher 1 über die Leitungen 8 das von ihm wiederzugebende Audiosignal zuführt.

Dieses Audiosignal ist über die Leitungen 9 gleichzeitig an eine Schaltungsanordnung 10 gelegt, bei der es sich beispielsweise um eine Modulationsschaltung handelt, die auf das zum Betrieb des Flachkondensators 3 erforderliche Betriebs-Wechselspannungssignal, das ihr über die Leitungen 12 zugeführt wird, .die niederfrequenten Anteile des vom Ansteuergerät 7 kommenden Audiosignals aufmoduliert. Zu diesem Zweck kann die Schaltungsanordnung 10 beispielsweise ein Tiefpaßfilter (nicht dargestellt) umfassen, den das Audiosignal zugeführt wird und das nur dessen niedrige Frequenzanteile durchläßt, die dann auf die Betriebs-Wechselspannung aufmoduliert werden.

Das derart veränderte Betriebs-Wechselspannungssignal wird dem Flachkondensator 3 über die Leitungen 14 zugeführt, die mit Hilfe der Kontakte 15,16 mit der seine Basiselektrode bildenden Membran 2 und der Deckelektrode 6 elektrisch leitend verbunden sind. Durch diese Anordnung ändert sich die Helligkeit des vom Flachkondensator 3 abgegebenen Lichtes in Abhängigkeit von den Schwankungen der niederfrequenten Anteile des Audiosignals.

Besteht in Abweichung von dem dargestellten Ausführungsbeispiel die Membran des Lautsprecher 1 nicht aus Metall sondern beispielsweise aus einem Karton, so wird auf die in Schallabgaberichtung S weisende Oberfläche dieser Membran vor dem Aufbringen der Isolations- und Reflexionsschicht 4 zunächst eine elektrisch leitende Schicht aufgebracht, die dann als Basiselektrode des Flachkondensators 3 dient.

Die Schaltungsanordnung 10 kann eine dem erwähnten Tiefpaßfilter nachgeschaltete Transformatorschaltung enthalten, die niederfrequente Anteile des über die Leitungen 9 zugeführten Audiosignals auf den für den Betrieb des Flachkondensators 3 erforderlichen Wert hoch transformiert.

Weiterhin ist es möglich, auf der in Schallabgaberichtung S weisenden Oberfläche der Membran 2 mehr als einen Flachkondensator 3 auszubilden. Wenn die Membran aus Metall besteht, kann sie für alle diese Flachkondensatoren als Basiselektrode dienen, während die Deckelektroden vorzugsweise voneinander elektrisch isoliert ausgebildet werden, um eine getrennte Ansteuerung zu ermöglichen. In diesem Fall hat die Schaltungsanordnung 10 mehrere Ausgänge, die mit den verschiedenen Deckelektroden verbunden sind. Sie kann dann beispielsweise Frequenzweichen enthalten, so daß auf die verschiedenen Ausgänge Audiosignale in unterschiedlichen Frequenzbereichen gegeben werden können und die mehreren Flachkondensatoren in unterschiedlicher Weise aufleuchten bzw. ihre Helligkeit verändern. Vorzugsweise besitzen diese mehreren Flachkondensatoren unterschiedlich eingefärbte Pigmentschichten, so daß sie in unterschiedlichen Farben elektrolumineszieren.

Die Elektrolumineszenz-Leuchtanordnung kann zusätzlich zu dem auf der Membran 2 des Lautsprechers 1 aufgebrachten Flachkondensator 3 oder statt seiner einen an einer anderen Stelle angebrachten Flachkondensator umfassen, der in der beschriebenen Weise angesteuert wird und seine Helligkeit in Abhängigkeit von den Schwankungen des niederfrequenten Audiosignals ändert.

## Patentansprüche

1. Elektrolumineszenz-Leuchtanordnung, mit wenigstens einem Flachkondensator (3), der eine Basiselektrode und eine transparente Deckelektrode (6) umfaßt, zwischen denen sich eine Pigmentschicht (5) befindet, die durch das Anlegen einer Betriebs-Wechselspannung an die beiden Elektroden zum Leuchten gebracht wird, **dadurch gekennzeichnet, daß** eine Schaltungsanordnung (10) zur Beeinflussung der Betriebs-Wechselspannung des Flachkondensators (3) durch ein niederfrequentes Wechselspannungssignal vorgesehen ist.

2. Elektrolumineszenz-Leuchtanordnung nach Anspruch 1, **dadurch gekennzeichnet, daß** die Schaltungsanordnung (10) ein Tiefpaßfilter enthält, dem ein von einem Ansteuergerät (7) für einen Lautsprecher (1) abgegebenes Audiosignal zugeführt wird und an dessen Ausgang das niederfrequente Wechselspannungssignal erscheint.

3. Elektrolumineszenz-Leuchtanordnung nach einem der Ansprüche 1 oder 2, **dadurch gekennzeichnet, daß** die Schaltungsanordnung (10) eine Modulationsschaltung umfaßt, durch die das niederfrequente Wechselspannungssignal auf die höherfrequente Betriebs-Wechselspannung des Flachkondensators (3) aufmoduliert wird.

4. Elektrolumineszenz-Leuchtanordnung nach einem der Ansprüche 1 oder 2 **dadurch gekennzeichnet, daß** die Schaltungsanordnung (10) eine die Amplitude des niederfrequenten Wechselspannungssignals auf einen für den Betrieb des Flachkondensators (3) geeigneten Wert transformierende Schaltung umfaßt.

5. Elektrolumineszenz-Leuchtanordnung nach einem der vorhergehenden Ansprüche, **dadurch gekennzeichnet, daß** der wenigstens eine Flachkondensator (3) unmittelbar auf die Membran (2) eines durch das niederfrequente Wechselspannungssignal angesteuerten Lautsprechers (1) aufgebracht ist.

6. Elektrolumineszenz-Leuchtanordnung nach Anspruch 5, **dadurch gekennzeichnet, daß** auf die Membran (2) des Lautsprechers (1) eine elektrisch leitende Schicht aufgebracht ist, die als Basiselektrode des Flachkondensators (3) dient.

7. Elektrolumineszenz-Leuchtanordnung nach Anspruch 5 mit einem Lautsprecher (1), der eine elektrisch leitende Membran (2) besitzt, **dadurch gekennzeichnet, daß** die elektrisch leitende Membran (2) als Basiselektrode des wenigstens einen auf ihr aufgebauten Flachkondensators (3) dient.

8. Elektrolumineszenz-Leuchtanordnung nach Anspruch 5 mit einem Lautsprecher (1), der eine elektrisch leitende Membran (2) besitzt, **dadurch gekennzeichnet, daß** auf die Membran (2) des Lautsprechers (1) eine elektrisch isolierende Schicht und über dieser eine elektrisch leitende Schicht aufgebracht ist, die als Basiselektrode für den wenigstens einen auf ihr aufgebauten Flachkondensators (3) dient.

9. Elektrolumineszenz-Leuchtanordnung nach Anspruch 7 oder 8, **dadurch gekennzeichnet, daß** auf der Membran (2) mehrere räumlich voneinander getrennte Flachkondensatoren aufgebaut sind.

10. Elektrolumineszenz-Leuchtanordnung nach Anspruch 9, **dadurch gekennzeichnet, daß** die mehreren Flachkondensatoren voneinander unabhängig ansteuerbar sind.
